(19) 

**Europäisches Patentamt**
**European Patent Office**
**Office européen des brevets**

(11) **EP 4 783 664 A1**

(12) **EUROPEAN PATENT APPLICATION**
published in accordance with Art. 153(4) EPC

(43) Date of publication:
29.07.2026 Bulletin 2026/31

(21) Application number: 24870302.7

(22) Date of filing: 28.08.2024

(51) International Patent Classification (IPC):
*H04W 36/00* (2009.01)    *H04W 24/00* (2009.01)

(52) Cooperative Patent Classification (CPC):
H04W 24/00; H04W 36/00

(86) International application number:
PCT/CN2024/115265

(87) International publication number:
WO 2025/066756 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.09.2023 CN 202311288677

(71) Applicant: HUAWEI TECHNOLOGIES CO., LTD.
Shenzhen 518129 (CN)

(72) Inventors:
• ZHANG, Haisen
  Shenzhen, Guangdong 518129 (CN)
• ZHANG, Li
  Shenzhen, Guangdong 518129 (CN)
• ZHENG, Lili
  Shenzhen, Guangdong 518129 (CN)
• CHEN, Lei
  Shenzhen, Guangdong 518129 (CN)

(74) Representative: Gill Jennings & Every LLP
The Broadgate Tower
20 Primrose Street
London EC2A 2ES (GB)

(54) **MEASUREMENT METHOD AND APPARATUS**

(57) This application relates to the field of communication technologies, and in particular, to a measurement method and an apparatus, to make clear understandings of a network device and a terminal device about whether to configure a measurement window and a measurement gap, thereby reducing duration of scheduling interruption of the terminal device due to measurement, and improving communication performance. The method includes: A terminal device receives first information from a network device. The terminal device measures a first evolved universal terrestrial radio access E-UTRA measurement object MO based on a measurement gap when the first information indicates the measurement gap and does not indicate a measurement window, where the first E-UTRA MO is an E-UTRA MO that has scheduling restriction and for which a measurement gap is not needed for measurement; or the terminal device skips measuring the first E-UTRA MO when the first information does not indicate the measurement gap and does not indicate the measurement window.

Terminal device → Network device

S401: First information

S402: When the first information indicates a measurement gap and does not indicate a measurement window, measure, based on the measurement gap, a first E-UTRA MO that has scheduling restriction and for which a measurement gap is not needed for measurement

S403: When the first information does not indicate the measurement gap and does not indicate the measurement window, skip measuring the first E-UTRA MO that has scheduling restriction and for which a measurement gap is not needed for measurement

FIG. 4

**Description**

CROSS-REFERENCE TO RELATED APPLICATIONS

This application claims priority to Chinese Patent Application No. 202311288677.5, filed with the China National Intellectual Property Administration on September 27, 2023 and entitled "MEASUREMENT METHOD AND APPARATUS", which is incorporated herein by reference in its entirety.

TECHNICAL FIELD

This application relates to the field of communication technologies, and in particular, to a measurement method and an apparatus.

BACKGROUND

In a communication system, to ensure service continuity and communication quality of a terminal device, the terminal device usually needs to perform cell measurement, to implement cell reselection (reselection) and cell handover (handover). Cell measurement types include intra-frequency measurement and inter-frequency/inter-RAT measurement.
When the terminal device performs inter-frequency/inter-RAT measurement during initial access or in a radio resource control (radio resource control, RRC) connected (RRC_connected) mode, to ensure radio link quality between the terminal device and a current serving cell, the terminal device usually stops, in a specified time period, receiving a signal and data of the serving cell of the terminal device, and receives a signal of another cell to perform inter-frequency measurement or inter-RAT measurement. After the time period ends, the terminal device starts to receive the signal and the data of the serving cell again. This time period is referred to as a measurement gap (measurement gap, MG). The terminal device receives a reference signal of a neighboring cell in the measurement gap, and measures the reference signal of the neighboring cell. After the measurement is completed, the terminal device sends a measurement report (measurement report) to a network device that manages the serving cell. Then, the network device hands over, based on the measurement report, the terminal device to a cell with better signal quality.
In the 3rd generation partnership project (3rd generation partnership project, 3GPP) R18 standard, it is agreed that for inter-RAT measurement, the terminal device is also allowed to perform measurement outside a measurement gap. For example, in a scenario in which there is a spare radio frequency link that can be used to measure an evolved universal terrestrial radio access (evolved universal terrestrial radio access, E-UTRA) measurement object (measurement object, MO), or in a scenario in which an active bandwidth part (bandwidth part, BWP) can fully cover an E-UTRA MO that needs to be measured, a terminal device whose serving cell is a new radio (new radio, NR) cell can also measure the E-UTRA MO outside a measurement gap. However, if the E-UTRA MO is measured outside a measurement gap, scheduling of the network device on the terminal device may be restricted. In other words, the terminal device cannot normally perform uplink and downlink data scheduling of the network device. Therefore, a measurement window (measurement window) is further introduced in the standard, and a defined time domain position is used for the terminal device to measure an E-UTRA MO that causes scheduling restriction.
However, after the measurement window is introduced, understandings of the network device and the terminal device about whether to indicate (or configure) the measurement window and the measurement gap are not clear, and which MOs are measured at which time domain positions is not clear. This may cause inconsistency between understanding of the terminal device and understanding of the network device, and may affect communication performance.

SUMMARY

Embodiments of this application provide a measurement method and an apparatus, to make clear understandings of a network device and a terminal device about whether to indicate (or configure) a measurement window and a measurement gap, thereby reducing duration of scheduling interruption of the terminal device due to measurement, and improving communication performance.
According to a first aspect, an embodiment of this application provides a measurement method. The method includes: A terminal device receives first information from a network device.
The terminal device measures a first E-UTRA MO based on a measurement gap when the first information indicates the measurement gap and does not indicate a measurement window. The first E-UTRA MO is an E-UTRA MO that has scheduling restriction and for which a measurement gap is not needed for measurement. The terminal device skips measuring the first E-UTRA MO when the first information does not indicate the measurement gap and does not indicate the measurement window.
According to the foregoing method, when there is, in the terminal device, the first E-UTRA MO (that is, a long term evolution (long term evolution, LTE) MO) that has scheduling restriction and for which a measurement gap is not needed for measurement, the network device may indicate (or configure) only the measurement gap, to cause the terminal device to measure the first E-UTRA MO based on the measurement gap; or does not indicate (or configure) the measurement gap and the measurement window, to indirectly/implicitly indicate not to measure the first E-UTRA MO. In this way, duration of scheduling interruption of the terminal device due to measurement can be reduced, understandings of the terminal device and the network device about whether to indicate (or configure) the measurement window and the measurement gap are made clear. This helps improve communication performance between the terminal device and the network device.

In a possible design, before the terminal device receives the first information from the network device, the method further includes: The terminal device sends second information to the network device. The second information indicates that the terminal device supports E-UTRA measurement without a measurement gap when an E-UTRA cell reference signal (cell reference signal, CRS) is fully contained within an active bandwidth part (bandwidth part, BWP) of the terminal device. The first E-UTRA MO is fully contained within the BWP. Alternatively, the second information indicates that a measurement gap is not needed in a first E-UTRA band (band) for E-UTRA measurement, and the first E-UTRA MO corresponds to the first E-UTRA band.

According to the foregoing design, the network device can learn of information about whether the terminal device needs a measurement gap for measurement on the first E-UTRA MO.

In a possible design, the measurement gap indicated by the first information is determined based on a new radio (new radio, NR) MO or a second E-UTRA MO that is configured by the network device for the terminal device and for which a measurement gap is needed for measurement.

According to the foregoing design, the network device may indicate (or configure) the measurement gap based on the NR MO or the second E-UTRA MO for which a measurement gap is needed for measurement and that is configured for the terminal device, and be compatible with measurement on the NR MO or the second E-UTRA MO for which a measurement gap is needed for measurement.

According to a second aspect, an embodiment of this application provides a measurement method. The method includes: A terminal device receives third information from a network device. The third information indicates a measurement gap and a measurement window, the measurement gap corresponds to at least one first measurement occasion, and the measurement window corresponds to at least one second measurement occasion. When a first target measurement occasion collides with a second target measurement occasion, the terminal device measures a MO based on one or more of the following: a priority of the measurement gap and a priority of the measurement window, a quantity of first measurement occasions corresponding to the measurement gap and a quantity of second measurement occasions corresponding to the measurement window, and a measurement gap proportion coefficient for each type of MO. The first target measurement occasion belongs to the at least one first measurement occasion, and the second target measurement occasion belongs to the at least one second measurement occasion.

According to the foregoing method, the terminal device can resolve collision between the measurement gap and the measurement window based on one or more of the following: the priority of the measurement gap and the priority of the measurement window, the quantity of first measurement occasions corresponding to the measurement gap and the quantity of second measurement occasions corresponding to the measurement window, and the measurement gap proportion coefficient for each type of MO.

In a possible design, when the first target measurement occasion collides with the second target measurement occasion, that the terminal device measures the MO based on the priority of the measurement gap and the priority of the measurement window includes: The terminal device measures the MO based on the first target measurement occasion when the priority of the measurement gap is higher than or equal to the priority of the measurement window. The terminal device measures the MO based on the second target measurement occasion when the priority of the measurement gap is lower than the priority of the measurement window. Optionally, the method further includes: The terminal device receives fourth information from the network device. The fourth information indicates the priority of the measurement gap and/or the priority of the measurement window.

According to the foregoing method, a solution in which the MO is measured based on a priority when there is collision between measurement occasions of the measurement gap and the measurement window is provided.

In a possible design, when the first target measurement occasion collides with the second target measurement occasion, that the terminal device measures the MO based on the quantity of first measurement occasions corresponding to the measurement gap and the quantity of second measurement occasions corresponding to the measurement window includes: The terminal device measures the MO based on the second target measurement occasion when the quantity of first measurement occasions corresponding to the measurement gap is greater than or equal to the quantity of second measurement occasions corresponding to the measurement window. The terminal device measures the MO based on the first target measurement occasion when the quantity of first measurement occasions corresponding to the measurement gap is less than the quantity of second measurement occasions corresponding to the measurement window.

According to the foregoing method, a solution in which measurement is performed on the MO based on a quantity of measurement occasions when a measurement occasion of the measurement gap collides with a measurement occasion of the measurement window is provided. In addition, a measurement occasion in a measurement gap or a measurement window with a small quantity of measurement occasions is preferentially selected, which helps meet a measurement requirement of the terminal device for measuring the MO in the measurement gap and the measurement window.

In a possible design, when the first target measurement occasion collides with the second target measurement occasion, that the terminal device measures the MO based on the measurement gap proportion coefficient for each type of MO includes: The terminal device measures a MO of a target type on the first target measurement occasion. The MO of the target type is determined based on a first measurement gap proportion coefficient for an intra-frequency MO, a second measurement gap proportion coefficient for an inter-frequency MO or an inter-RAT MO other than an E-UTRA MO that has scheduling restriction, and a third measurement gap proportion coefficient for the E-UTRA MO that has scheduling restriction.

According to the foregoing method, a solution in which measurement is performed on the MO based on the measurement gap proportion coefficient for each type of MO when there is collision between measurement occasions of the measurement gap and the measurement window is provided.

In a possible design, the first measurement gap proportion coefficient is X, the second measurement gap proportion coefficient is 100-X-Y, and the third measurement gap proportion coefficient is Y, where X and Y are natural numbers, and X+Y is less than or equal to 100. Alternatively, the first measurement gap proportion coefficient is X, the second measurement gap proportion coefficient is (100-X)*Q%, and the third measurement gap proportion coefficient is (100-X)*(100-Q)%, where X and Q are natural numbers less than or equal to 100.

According to a third aspect, an embodiment of this application provides a measurement method. The method includes: A network device configures a first E-UTRA MO for a terminal device. The first E-UTRA MO is an E-UTRA MO that has scheduling restriction and for which a measurement gap is not needed for measurement. The network device sends first information to the terminal device. The first information indicates a measurement gap and does not indicate a measurement window, or the first information does not indicate the measurement gap and does not indicate the measurement window.

In a possible design, before the network device configures the first E-UTRA MO for the terminal device, the method further includes: The network device receives second information from the terminal device. The second information indicates that the terminal device supports E-UTRA measurement without a measurement gap when an E-UTRA CRS is fully contained within an active BWP of terminal device. The first E-UTRA MO is fully contained within the BWP. Alternatively, the second information indicates that a measurement gap is not needed in a first E-UTRA band for E-UTRA measurement, and the first E-UTRA MO corresponds to the first E-UTRA band.

In a possible design, the measurement gap indicated by the first information is determined based on a new radio NR MO or a second E-UTRA MO that is configured by the network device for the terminal device and for which a measurement gap is needed for measurement.

According to a fourth aspect, an embodiment of this application provides a measurement method. The method includes: A network device sends third information to a terminal device. The third information indicates a measurement gap and a measurement window, the measurement gap corresponds to at least one first measurement occasion, the measurement window corresponds to at least one second measurement occasion, and the at least one first measurement occasion does not collide with the at least one second measurement occasion.

In a possible design, when a measurement window periodicity of the measurement window is an integer multiple of a synchronization signal/physical broadcast channel block SSB-based measurement timing configuration SMTC periodicity, a measurement window offset of the measurement window satisfies: (n-1)*smtc_periodicity+smtc_offset+smtc_duration≤window_offset≤n*smtc_periodicity+smtc_offs et-window_duration. When the SMTC periodicity is an integer multiple of the measurement window periodicity, the measurement window offset of the measurement window satisfies: (n-1)*window_periodicity+window_offset+window_duration≤smtc_offset≤n*window_periodicity+ window_offset-smtc_duration. window_offset represents the measurement window offset, smtc_offset represents an SMTC offset, window_duration represents window duration of the measurement window, smtc_periodicity represents the SMTC periodicity, smtc_duration represents SMTC duration, and window_periodicity represents the measurement window periodicity. n=0, 1, 2, ..., or the like, and the measurement gap is determined based on smtc_offset, smtc_periodicity, and smtc_duration.

According to a fifth aspect, an embodiment of this application provides a communication apparatus. The apparatus has a function of implementing the method according to any one of the first aspect to the fourth aspect. The function may be implemented by hardware, or may be implemented by hardware executing corresponding software. The hardware or software includes one or more modules or units corresponding to the foregoing functions, for example, includes an interface unit and a processing unit.

In a possible design, the apparatus may be a chip or an integrated circuit.

In a possible design, the apparatus includes a memory and a processor. The memory is configured to store instructions executed by the processor. When the instructions are executed by the processor, the apparatus may perform the method according to any one of the first aspect to the fourth aspect.

According to a sixth aspect, an embodiment of this application provides a communication apparatus. The communication apparatus includes an interface circuit and a processor, and the processor and the interface circuit are coupled to each other. The processor is configured to implement the method according to any one of the first aspect to the fourth aspect by using a logic circuit or by executing instructions. The interface circuit is configured to: receive a signal from a communication apparatus other than the communication apparatus and transmit the signal to the processor, or send a signal from the processor to a communication apparatus other than the communication apparatus. It can be understood that the interface circuit may be a transceiver, a transceiver machine, a radio transceiver, or an input/output interface.

Optionally, the communication apparatus may further include a memory, configured to: store instructions executed by the processor, or store input data required by the processor to run instructions by the processor, or store data generated after the processor runs instructions. The memory may be a physically independent unit, or may be coupled to the processor, or the processor includes the memory (that is, the processor and the memory are integrated together).

In a possible implementation, the communication apparatus is a chip.

According to a seventh aspect, an embodiment of this application provides a communication system. The system includes a terminal device and a network device. The terminal device may be configured to implement the method in the first aspect or the second aspect, and the network device may be configured to implement the method in the third aspect or the fourth aspect.

According to an eighth aspect, an embodiment of this application provides a computer-readable storage medium. The computer-readable storage medium stores a computer program or instructions. When the computer program or the instructions are executed by a processor, the method according to any one of the first aspect to the fourth aspect may be implemented.

According to a ninth aspect, an embodiment of this application further provides a computer program product, including a computer program or instructions. When the computer program or the instructions are executed by a processor, the method according to any one of the first aspect to the fourth aspect may be implemented.

According to a tenth aspect, an embodiment of this application further provides a chip system. The chip system includes a processor. The processor is configured to be coupled to a memory. The memory is configured to store a program or instructions. When the program or the instructions are executed by the processor, the method according to any one of the first aspect to the fourth aspect may be implemented.

For technical effect that can be achieved in the third aspect to the tenth aspect, refer to the technical effect that can be achieved in the first aspect or the second aspect. Details are not described herein again.

## BRIEF DESCRIPTION OF DRAWINGS

FIG. 1 is a diagram of an architecture of a communication system according to an embodiment of this application;
FIG. 2 is a diagram of a time domain position of a reference signal according to an embodiment of this application;
FIG. 3 is a diagram of a relationship between a measurement gap and an SMTC configuration according to an embodiment of this application;
FIG. 4 is a diagram 1 of a measurement method according to an embodiment of this application;
FIG. 5 is a diagram 2 of a measurement method according to an embodiment of this application;
FIG. 6 is a diagram of distribution of a measurement gap and an SMTC according to an embodiment of this application;
FIG. 7 is a diagram of distribution of measurement occasions of a measurement gap and a measurement window according to an embodiment of this application;
FIG. 8 is a diagram 1 of a structure of a communication apparatus according to an embodiment of this application; and
FIG. 9 is a diagram 2 of a structure of a communication apparatus according to an embodiment of this application.

## DESCRIPTION OF EMBODIMENTS

Technical solutions in embodiments of this application may be applied to various communication systems, for example, a long term evolution (long term evolution, LTE) system, which is also referred to as an E-TURA system, an LTE-advanced (LTE-advanced, LTE-A) system, a universal mobile telecommunications system (universal mobile telecommunications system, UMTS), a 5th generation (5th generation, 5G) mobile communication system like NR, a beyond 5G (beyond 5G, B5G) mobile communication system, a communication system evolved after 5G like a 6th generation (6th generation, 6G) mobile communication system, and the like. The communication system may alternatively be a device-to-device (device-to-device, D2D) network, a machine-to-machine (machine-to-machine, M2M) network, an internet of things (internet of things, IoT) network, or another network.

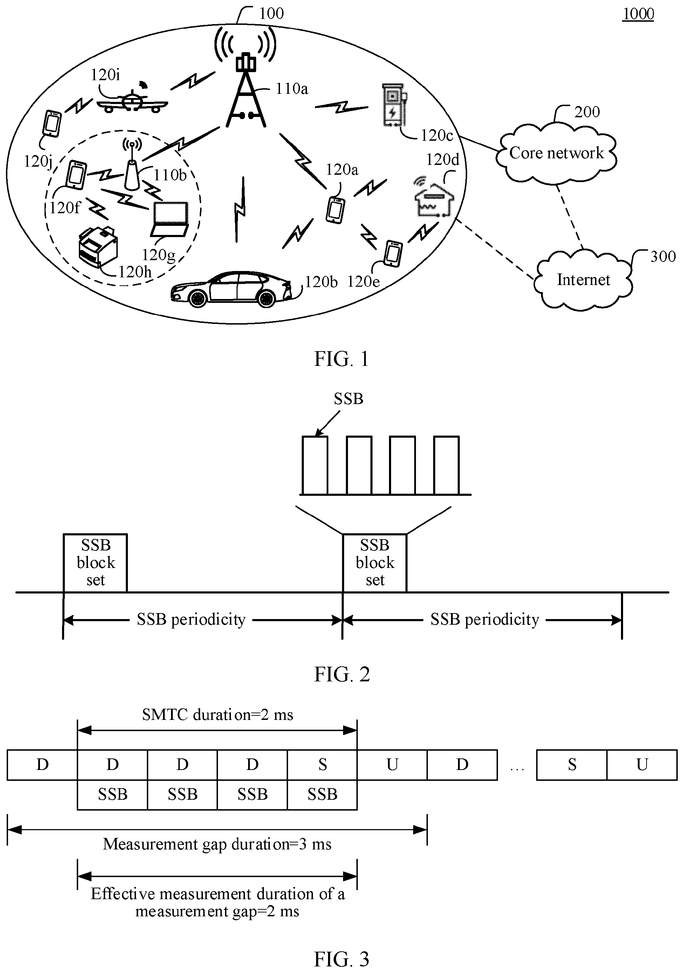

An architecture of a communication system to which embodiments of this application are applied may be shown in FIG. 1. A communication system 1000 includes a radio access network (radio access network, RAN) 100 and a core network (core network, CN) 200. Optionally, the communication system 1000 may further include an internet 300. The RAN 100 includes at least one network device (for example, 110a and 110b in FIG. 1, which are collectively referred to as 110) and at least one terminal device (for example, 120a to 120j in FIG. 1, which are collectively referred to as 120). The RAN 100 may further include another RAN node, for example, a wireless relay device and/or a wireless backhaul device (not shown in FIG. 1). The terminal device 120 is connected to the network device 110 in a wireless manner. The network device 110 is connected to the core network 200 in a wireless or wired manner. A core network device in the core network 200 and the network device 110 in the RAN 100 may respectively be different physical devices, or may be a same physical device that integrates a logical function of the core network and a logical function of the radio access network.

The RAN 100 may be a cellular system related to the 3rd Generation Partnership Project (3rd generation partnership project, 3GPP), for example, a 4G system, a 5G system, or a system evolved after 5G (for example, a 6G mobile communication system). Alternatively, the RAN 100 may be an open access network (open RAN, O-RAN, or ORAN) or a cloud radio access network (cloud radio access network, CRAN). The RAN 100 may alternatively be a communication system that integrates two or more of the foregoing systems.

An apparatus provided in embodiments of this application may be used in the network device 110 or the terminal device 120. It may be understood that FIG. 1 shows only a possible architecture of the communication system to which embodiments of this application may be applied. In another possible scenario, the architecture of the communication system may alternatively include another device.

The network device 110 is a node in the radio access network (radio access network, RAN), and may also be referred to as an access network device or a RAN node (or device). The network device 110 is configured to help the terminal device implement wireless access. A plurality of network devices 110 in the communication system 1000 may be nodes of a same type, or may be nodes of different types. In some scenarios, roles of the network device 110 and the terminal device 120 are relative. For example, the network element 120i in FIG. 1 may be a helicopter or an uncrewed aerial vehicle, and may be configured as a mobile base station. For the terminal device 120j that accesses the RAN 100 through the network element 120i, the network element 120i is a base station. However, for the base station 110a, the network element 120i is a terminal device. The network device 110 and the terminal device 120 are sometimes referred to as communication apparatuses. For example, network elements 110a and 110b in FIG. 1 may be understood as communication apparatuses having a base station function, and the network elements 120a to 120j may be understood as communication apparatuses having a terminal device function.

In a possible scenario, the network device may be a base station (base station), an evolved NodeB (evolved NodeB, eNodeB), a transmission reception point (transmission reception point, TRP), a transmission point (transmission point, TP), a next generation NodeB (next generation NodeB, gNB), a next generation base station in a 6G mobile communication system, a base station in a future mobile communication system, a satellite, an integrated access and backhaul (integrated access and backhaul, IAB) node, a mobile switching center, or a network device in a non-terrestrial network (non-terrestrial network, NTN) communication system. That is, the network device may be deployed on a high-altitude platform, a satellite, or the like. The network device may be a macro base station (for example, 110a in FIG. 1), a micro base station or an indoor base station (for example, 110b in FIG. 1), a relay node or a donor node, or a radio controller in a CRAN scenario. The network device may alternatively be a device having a base station function in device-to-device (device-to-device, D2D) communication, internet of vehicles communication, uncrewed aerial vehicle communication, or machine communication. Optionally, the network device may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of network devices collaborate to assist a terminal device in implementing wireless access, and different network devices separately implement a part of functions of the base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including the CU node and the DU node. In addition, the CU may be classified as a network device in the access network RAN, or the CU may be classified as a network device in the core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application.

Any one of the CU (or the CU-CP or the CU-UP), the DU, and the RU in this application may be implemented by using a software module, a hardware module, or a combination of the software module and the hardware module.

A form of the network device is not limited in embodiments of this application. An apparatus for implementing a function of the network device may be a network device, or may be an apparatus, for example, a chip system, that can support the network device in implementing the function. The apparatus may be mounted in the network device or used in a manner of matching the network device.

The terminal device 120 may also be referred to as a terminal, user equipment (user equipment, UE), a mobile station (mobile station, MS), a mobile terminal (mobile terminal, MT), or the like, or is a device that provides a user with voice or data connectivity, or may be an internet of things device. For example, the terminal device includes a handheld device, a vehicle-mounted device, or the like that has a wireless connection function. Currently, the terminal device may be a mobile phone, a tablet computer, a notebook computer, a palmtop computer, a mobile internet device (mobile internet device, MID), a wearable device (for example, a smartwatch, a smart band, or a pedometer), a vehicle-mounted (for example, a car, a bicycle, an electric vehicle, an airplane, a ship, a train, or a high-speed train) device, a satellite terminal, a virtual reality (virtual reality, VR) device, an augmented reality (augmented reality, AR) device, a point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device having a terminal function. For example, the terminal device may alternatively be a device that functions as a terminal in D2D communication.

A device form of the terminal device is not limited in embodiments of this application. An apparatus for implementing a function of the terminal device may be a terminal device, or may be an apparatus, for example, a chip system, that can support the terminal device in implementing the function. The apparatus may be mounted in the terminal device or used in a manner of matching the terminal device. In embodiments of this application, the chip system may include a chip, or may include a chip and another discrete component.

For ease of understanding by a person skilled in the art, the following explains and describes some terms in this application.

(1) Neighboring cell measurement: Neighboring cell measurement may also be referred to as neighbor cell measurement. In a communication system, to ensure service continuity, a terminal device may perform handover or reselection between cells with different coverage areas, to obtain continuous services of a wireless network. For example, when the terminal device moves to a cell edge, a network device delivers an intra-frequency, inter-frequency, or inter-RAT measurement control task, or the like, so that the terminal device switches to an intra-frequency, inter-frequency, or inter-RAT neighboring cell.

There are a plurality of scenarios of cell handover or reselection. For example, in a scenario 1, after the terminal device accesses a serving cell, when the terminal device moves, for example, being far away from the serving cell, the terminal device may perform cell handover or cell reselection. In a scenario 2, when quality of service of a serving cell that currently serves the terminal device is poor (for example, signal strength is low), the terminal device may perform cell handover or cell reselection, to access a neighboring cell with a better signal. The serving cell herein is a cell that currently serves the terminal device, and the neighboring cell may be understood as another cell, other than the serving cell, that the terminal device can find in serving cells.

For example, when the terminal device is in an RRC connected (RRC_connected) mode, there is an RRC link between the terminal device and the serving cell. The serving cell may deliver measurement configuration information to the terminal device by using RRC signaling or the like, to indicate the terminal device to perform neighboring cell measurement. The terminal device may report a neighboring cell measurement result to the serving cell, and the serving cell hands over, based on the measurement result, the terminal device to a cell with better signal quality. When the terminal device is in the RRC_connected mode, a process of switching from the serving cell to the neighboring cell is a cell handover (handover) process. It may be understood that the foregoing cell reselection or cell handover process is performed based on the neighboring cell measurement result.

For another example, when the terminal device is in a radio resource control (radio resource control, RRC) idle (RRC_idle) mode and an RRC inactive (RRC_inactive) mode, there is no RRC link between the terminal device and the serving cell. When signal quality of a serving cell on which the terminal device camps is lower than a specific threshold, the serving cell may deliver measurement configuration information to the terminal device, indicating that the terminal device can perform neighboring cell measurement, to measure signal quality of a neighboring cell. If the signal quality meets a condition, the terminal device switches to the neighboring cell and camps on the neighboring cell. When the terminal device is in the RRC_idle mode and the RRC_inactive mode, a process of switching from the serving cell to another cell is a cell reselection process.

(2) Reference signal: The terminal device may perform cell search, cell measurement, and the like by using a reference signal delivered by the network device. In a 4G (for example, an LTE) network, the network device continuously transmits cell reference signals (cell reference signals, CRSs), and the CRSs may be evenly distributed in each subframe. Therefore, the terminal device can easily measure signal quality of a neighboring cell. Provided that a carrier frequency of a reference signal that needs to be measured is determined, measurement can be performed at any time domain position.

In a 5G (for example, an NR) network, to reduce overheads and interference from a reference signal from another cell, a CRS is not used, and a synchronization signal/physical broadcast channel block (SS/PBCH block, SSB) is introduced for cell signal measurement. The synchronization block includes a synchronization signal (synchronization signal, SS) and a physical broadcast channel (physical broadcast channel, PBCH), and a transmission periodicity of the synchronization block is longer than that of the CRS.

As shown in FIG. 2, the SSB is sent periodically, and a plurality of SSBs may be sent in one periodicity. The plurality of SSBs may be centralized in a specific time window in the periodicity to form an SSB block set (burst set/burst). An SSB periodicity may be 5 ms, 10 ms, 20 ms, 40 ms, 80 ms, 160 ms, or the like, and the SSB periodicity may vary with different NR cells. For example, it is assumed that the SSB periodicity is 20 ms, and the SSB block set may be sent in a first or second 5 ms in a centralized manner.

(3) Measurement configuration information: Measurement configuration information is sent by the network device to the terminal device, and the terminal device performs cell measurement based on the measurement configuration information. Generally, the network device may send the measurement configuration information by using RRC signaling (for example, an RRC reconfiguration (RRCReconfiguration) message). The measurement configuration information may include one or more of the following measurement parameters: a measurement object (measurement object, MO), a measurement gap (measurement gap, MG) configuration parameter, a measurement report reporting configuration (reporting configuration), a measurement report triggering quantity (triggering quantity), and a measurement identity (measurement identity), that is, a measurement ID.

(4) SSB-based measurement timing configuration (SSB-based measurement timing configuration, SMTC): A plurality of SSB beams are periodically sent in time domain in an NR cell (that is, SSB beam sweeping), and in frequency domain, an SSB beam of each cell is configured with a same frequency domain position. To ensure that an SSB beam in a cell is accurately and completely measured, when delivering the measurement configuration information, the network device not only indicates an SSB frequency that needs to be measured, but also indicates a time sequence position and duration for starting SSB measurement. Therefore, a new concept, namely, the SMTC, is introduced. An SMTC configuration can effectively indicate a time window for the terminal device to search for the SSB, thereby reducing unnecessary measurement power consumption of the terminal device. The SMTC represents a time sequence configuration delivered by the network device to the terminal device when the terminal device performs SSB-based measurement on a specific cell, and includes an SMTC periodicity, SMTC duration, and an SMTC offset (which may also be referred to as an SMTC offset).

(5) Measurement object: A measurement object is an object measured by the terminal device, and may include an NR measurement object (MeasObjectNR), an evolved universal terrestrial radio access (evolved universal terrestrial radio access, E-UTRA) measurement object (MeasObjectEUTRA), and the like.

MeasObjectEUTRA is an E-UTRA (that is, LTE) MO. MeasObjectEUTRA includes measurement-related information about an E-UTRA (that is, LTE) cell, such as a frequency of a reference signal of the E-UTRA (that is, LTE) cell, a carrier frequency (carrierFreq) of the reference signal, and a maximum allowed measurement bandwidth (allowedMeasBandwidth) on a carrier.

MeasObjectNR is an NR MO. MeasObjectNR includes measurement-related information about an NR cell, for example, information about an SSB of the NR cell, such as an SSB frequency, an SSB subcarrier spacing, and an SSB-based measurement timing configuration (SSB-based measurement timing configuration, SMTC) configuration. Definitions of the NR and LTE measurement objects are different. Therefore, concepts of intra-frequency measurement and inter-frequency measurement of NR are different from those of E-UTRA. For SSB-based intra-frequency measurement, an SSB frequency that is used for measurement and that is of a neighboring cell is the same as an SSB frequency of a serving cell, and SSB subcarrier spacings are the same. For SSB-based inter-frequency measurement, an SSB frequency that is used for measurement and that is of a neighboring cell is different from an SSB frequency of the serving cell, or the SSB frequencies are the same but SSB subcarrier spacings are different.

It may be understood that, in embodiments of this application, a MO of E-UTRA (that is, a MO of LTE) may also be referred to as an E-UTRA MO or an LTE MO, and a MO of NR may also be referred to as an NR MO.

In addition, it should be noted that the terms E-UTRA, LTE, and 4G in this application may be replaced with each other at any position.

(6) Measurement gap (MG): When a bandwidth of a receiver of the terminal device is insufficient to cover both a frequency on which a serving cell is located and a frequency on which a to-be-measured neighboring cell is located, the terminal device measures the to-be-measured neighboring cell in a specific measurement gap (gap). Currently, in an inter-frequency or inter-RAT (that is, inter-radio access technology (inter-radio access technology, inter-RAT)) scenario, the terminal device usually needs assistance of a measurement gap to perform effective measurement.

Intra-frequency measurement: A frequency for measurement does not collide with a frequency for data reception. The terminal device keeps monitoring a primary carrier, and therefore the terminal device may perform measurement without any adjustment. Particularly, if a current active BWP of the terminal device cannot cover a to-be-measured MO, a measurement gap is also needed for measurement.

Inter-frequency or inter-RAT measurement: If the terminal device does not have a plurality of receivers, or a bandwidth of a receiver of the terminal device does not cover a to-be-measured inter-frequency or inter-RAT frequency, signal receiving and sending of a serving cell and neighboring cell measurement cannot be simultaneously performed. In this case, the serving cell needs to arrange some measurement gaps for the terminal device to perform inter-frequency or inter-RAT measurement.

The measurement gap may be preconfigured or configured by the network device. The measurement gap is a time period in which the terminal device performs measurement, and no uplink and downlink transmission is scheduled during the measurement gap. Information about the measurement gap preconfigured or configured by the network device may include a measurement gap repetition period (measurement gap repetition period, MGRP), measurement gap duration or a measurement gap length (measurement gap length, MGL), and a measurement gap offset (gapOffset) used to configure a start position of the measurement gap; and may further include a measurement gap timing advance (measurement gap timing advance, MGTA). If the MGTA is configured, the terminal device starts measurement earlier than a subframe of the measurement gap by the MGTA.

Generally, a relationship between the measurement gap and the SMTC configuration may be shown in FIG. 3, where D represents a downlink slot, U represents an uplink slot, and S represents a flexible slot or a special slot. The key to configure the measurement gap is to ensure that during measurement, effective measurement duration obtained by subtracting frequency switching time at the beginning and end from measurement gap duration can fully cover SMTC duration of a frequency, to ensure that the inter-frequency frequency can be completely measured.

(7) Effective measurement window (effective measurement window, EMW): In the 3GPP R18 standard, it is agreed that for inter-RAT measurement, the terminal device is also allowed to perform measurement outside a measurement gap. Three types of inter-RAT measurement without a measurement gap are defined, including: Case a-1: Inter-RAT NR measurement is performed without a measurement gap, because there is an idle radio frequency link for measurement of the terminal device. Case b-1: Inter-RAT E-UTRA measurement is performed without a measurement gap, because there is an idle radio frequency link for measurement of the terminal device. Case b-2: When a to-be-measured E-UTRA CRS (that is, a to-be-measured E-UTRA MO) is fully contained within an active BWP of the terminal device, inter-RAT E-UTRA measurement is performed without a gap. In addition, the R18 standard further specifies that when an NR terminal device performs such E-UTRA (that is, LTE) measurement, no measurement gap or interruption (interruption) is needed.

However, when an E-UTRA MO is measured outside a measurement gap, the following problem is caused: The terminal device measuring the E-UTRA MO (for example, an E-UTRA CRS) causes restriction on NR scheduling. In other words, the terminal device cannot normally perform uplink and downlink data scheduling. Therefore, a concept of an effective measurement window is further introduced in the standard, and the effective measurement window may also be referred to as a measurement window (measurement window) or an effective measurement timing configuration (effective measurement timing configuration, EMTC). A defined time domain position is used for the terminal device to perform E-UTRA MO measurement that causes scheduling restriction (or has scheduling restriction). A measurement window periodicity, a measurement window offset, and window duration are defined for the measurement window. The defined measurement window periodicity includes 40 ms and 80 ms. If this concept is not introduced, the terminal device can measure the E-UTRA MO (for example, the E-UTRA CRS) at any position, while the network device does not learn of when the terminal device measures the E-UTRA MO (for example, the E-UTRA CRS), and cannot accurately schedule NR data, affecting NR data scheduling.

However, after the measurement window is introduced, understandings of the network device and the terminal device about whether to indicate (or configure) the measurement window and the measurement gap are not clear, and which MOs are measured at which time domain positions is not clear. This may cause inconsistency between understanding of the terminal device and understanding of the network device, and may affect communication performance.

In view of this, embodiments of this application provide a measurement method and an apparatus, to make clear understandings of the network device and the terminal device about whether to indicate (or configure) the measurement window and the measurement gap, thereby reducing duration of scheduling interruption of the terminal device due to measurement, and improving communication performance. The following describes in detail embodiments of this application with reference to accompanying drawings.

In addition, it should be understood that ordinal numbers such as "first" and "second" mentioned in embodiments of this application are used to distinguish between a plurality of objects, and are not intended to limit sizes, content, a sequence, a time sequence, priorities, importance, or the like of the plurality of objects. For example, first information and second information do not indicate different priorities, importance, or the like corresponding to the two pieces of information.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof refers to any combination of these items, including a singular item (piece) or any combination of a plurality of items (pieces). For example, at least one of a, b, or c indicates: a, b, c, a and b, a and c, b and c, or a, b, and c, where a, b, and c may be singular or plural.

The measurement method provided in embodiments of this application may be performed by a first communication apparatus and a second communication apparatus. The first communication apparatus herein may be a terminal device, or may be a processor, a module, a chip, a chip system, or the like that implements the method in the terminal device. The second communication apparatus may be a network device, or may be a processor, a module, a chip, a chip system, or the like that implements the method in the network device. The following uses an example in which the first communication apparatus and the second communication apparatus are the terminal device and the network device respectively to describe the measurement method in this application.

It may be understood that different embodiments of the present invention may be combined with each other, and when a separate embodiment is executed, only some steps may be performed, or more steps may be performed.

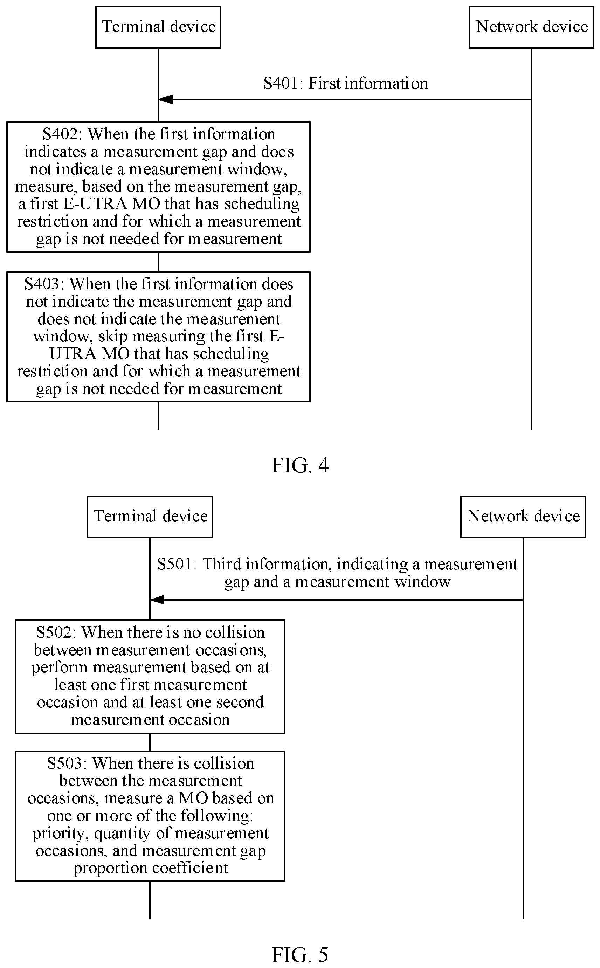

FIG. 4 is a diagram of a measurement method according to an embodiment of this application. The method includes the following steps.

S401: A network device sends first information to a terminal device, and correspondingly, the terminal device receives the first information.

Table 1 is a schematic table of a relationship between an existing MO type, a measurement gap, and a measurement window. The first row in Table 1 lists possible MO types, which may include an NR MO and an E-UTRA MO (that is, an LTE MO). The NR MO may include one or more of an NR MO for which a measurement gap is needed for measurement (briefly referred to as a need-for-gap NR MO) and an NR MO for which a measurement gap is not needed for measurement (briefly referred to as a no-need-for-gap NR MO). The E-UTRA MO (that is, the LTE MO) may include one or more of an E-UTRA MO for which a measurement gap is needed for measurement (briefly referred to as a need-for-gap E-UTRA MO), an E-UTRA MO that has scheduling restriction and for which a measurement gap is not needed for measurement (briefly referred to as a no-need-for-gap E-UTRA MO having restriction), and an E-UTRA MO that has no scheduling restriction and for which a measurement gap is not needed for measurement (briefly referred to as a no-need-for-gap E-UTRA MO having no restriction).

Table 1

| Measurement gap (gap) | Measurement window (window) | NR MO (need for gap) | NR MO (no need for gap) | E-UTRA MO (need for gap) | E-UTRA MO (no need for gap and having restriction) | E-UTRA MO (no need for gap and having no restriction) |
|---|---|---|---|---|---|---|
| Configured | Configured | Gap | Determined based on an SMTC position | Gap | Window | Any time domain position |
| Not configured | Configured | Not present | | Not present | Window | Any time domain position |

The second row in Table 1 represents that the network device indicates (or configures) the measurement gap and the measurement window for the terminal device. For the NR MO and the E-UTRA MO for which a measurement gap is needed for measurement, the terminal device performs measurement in the measurement gap. For the NR MO for which a measurement gap is not needed for measurement, the terminal device may determine, based on a time domain position of an SMTC corresponding to the NR MO, a time domain position at which measurement is to be performed, that is, perform measurement in a time window of an SSB indicated by the SMTC corresponding to the NR MO (which may also be referred to as measurement in the SMTC). For the E-UTRA MO that has scheduling restriction and for which a measurement gap is not needed for measurement, the terminal device may perform, based on the measurement window, measurement at a corresponding time domain position. For the E-UTRA MO that has no scheduling restriction and for which a measurement gap is not needed for measurement, the terminal device may perform measurement at any time domain position.

The third row in Table 1 represents that an NR MO and an E-UTRA MO for which a measurement gap is needed for measurement do not exist, and the network device indicates (or configures) only the measurement window for the terminal device. For the NR MO for which a measurement gap is not needed for measurement, the terminal device may determine, based on a time domain position of an SMTC corresponding to the NR MO, a time domain position at which measurement is to be performed. For the E-UTRA MO that has scheduling restriction and for which a measurement gap is not needed for measurement, the terminal device may perform, based on the measurement window, measurement at a corresponding time domain position. For the E-UTRA MO that has no scheduling restriction and for which a measurement gap is not needed for measurement, the terminal device may perform measurement at any time domain position.

It should be noted that the measurement gap in this embodiment of this application may alternatively be a network-controlled small gap (network-controlled small gap, NCSG) or an interruption (interruption). The interruption is a concept introduced in the 3GPP R18 standard, and is similar to the NCSG. Both the interruption and the NCSG are a range of time domain positions shorter than the measurement gap. In other words, in this embodiment of this application, that measurement needs to be performed in a measurement gap may also be understood as that measurement needs to be performed in one or more of the measurement gap, the NCSG, and the interruption, and that measurement is performed without a measurement gap may also be understood as that measurement is performed without one or more of the measurement gap, the NCSG, and the interruption.

In addition, in some implementations, the measurement gap may also be referred to as a gap (gap). Indicating (or configuring) the measurement gap in this embodiment of this application may also be understood as indicating (or configuring) activation/effectiveness of the measurement gap. The activated/effective measurement gap may be preconfigured or configured by the network device for the terminal device. Similarly, indicating (or configuring) the measurement window may also be understood as indicating (or configuring) activation/effectiveness of the measurement window. The activated/effective measurement window may be preconfigured or configured by the network device for the terminal device.

A current operating subcarrier spacing (subcarrier spacing, SCS), a beam (beam) direction, an operating mode, an operating band, and the like of the terminal device being different from an SCS, a beam direction, an operating mode, an operating band, and the like needed for a to-be-measured MO may cause the MO (for example, an NR MO or an E-UTRA MO) that has scheduling restriction. For example, an SCS of a serving cell of the terminal device is 30 kHz, and an SCS needed for a to-be-measured MO is 60 kHz; or the terminal device operates in a frequency range (frequency range, FR) 1 (that is, a band below 6 GHz) in a time division duplex (time division duplex, TDD) mode, and the to-be-measured MO requires the terminal device to operate in an FR2 (that is, a band above 30 GHz) in a frequency division duplex (frequency division duplex, FDD) mode. When measuring the MO, the terminal device cannot continue data receiving and sending in the serving cell, and there is scheduling restriction.

S402: The terminal device measures a first E-UTRA MO based on a measurement gap when the first information indicates the measurement gap and does not indicate a measurement window, where the first E-UTRA MO is an E-UTRA MO that has scheduling restriction and for which a measurement gap is not needed for measurement.

S403: The terminal device skips measuring the first E-UTRA MO when the first information does not indicate the measurement gap and does not indicate the measurement window.

In this embodiment of this application, a baseline solution is changed from: The network device indicates (or configures) a measurement window for the terminal device when a MO that needs to be measured by the terminal device includes an E-UTRA MO (that is, an LTE MO) that has scheduling restriction and for which a measurement gap is not needed for measurement, and the terminal device measures, based on the measurement window, the E-UTRA MO (that is, the LTE MO) that has scheduling restriction and for which a measurement gap is not needed for measurement to: The network device may not indicate (or configure) a measurement window for the terminal device when a MO that needs to be measured by the terminal device includes an E-UTRA MO (that is, an LTE MO) that has scheduling restriction and for which a measurement gap is not needed for measurement.

In a possible implementation, when the MO that needs to be measured by the terminal device includes the first E-UTRA MO that has scheduling restriction and for which a measurement gap is not needed for measurement, the network device may send, to the terminal device, the first information that indicates (or is used for configuring) the measurement gap and indicates (or is used for configuring) no measurement window. The first information may be measurement configuration information, measurement-related indication information, or the like.

Optionally, the first information may be included in an RRC reconfiguration message. The first information may be sent to the terminal device by using one message, or may be sent to the terminal device by using a plurality of messages. This is not limited in this application.

In an example, if the network device configures, for the terminal device, an NR MO and/or a second E-UTRA MO for which a measurement gap is needed for measurement, the measurement gap indicated (or configured) by using the first information may be determined based on the measurement gap needed for the NR MO and/or the second E-UTRA MO. Alternatively, if a measurement gap is preconfigured for the terminal device or the network device has configured the measurement gap for the terminal device, the network device may further indicate, by using the first information, that the preconfigured measurement gap or the measurement gap that has been configured by the network device for the terminal device is activated/effective. After the terminal device receives the first information, the terminal device may measure the first E-UTRA MO based on the measurement gap indicated (or configured) by using the first information. For example, the first E-UTRA MO may be measured in the measurement gap indicated (or configured) by using the first information. In other words, the first E-UTRA MO is measured at a time domain position (or in a time domain range) corresponding to the measurement gap indicated (or configured) by using the first information.

In another example, if the network device does not configure, for the terminal device, an NR MO and/or a second E-UTRA MO for which a measurement gap is needed for measurement, the network device may configure a new measurement gap for the terminal device, and indicate (or configure) the measurement gap by using the first information. After receiving the first information, the terminal device may measure the first E-UTRA MO based on the measurement gap indicated (or configured) by using the first information.

In a possible implementation, when the MO that needs to be measured by the terminal device includes the first E-UTRA MO that has scheduling restriction and for which a measurement gap is not needed for measurement, the network device may alternatively send, to the terminal device, the first information that indicates (or is used for configuring) no measurement gap and indicates (or is used for configuring) no measurement window, to indirectly/implicitly indicate not to measure the first E-UTRA MO. After receiving the first information that indicates (or is used for configuring) no measurement gap and indicates (or is used for configuring) no measurement window, the terminal device does not measure the first E-UTRA MO.

In an example, when a channel occupancy between the network device and the terminal device is greater than a first threshold, or an amount of data that needs to be transmitted (or scheduled) between the network device and the terminal device is greater than a second threshold, and the terminal device needs to measure the first E-UTRA MO, the network device may send, to the terminal device, the first information that indicates (or is used for configuring) no measurement gap and indicates (or is used for configuring) no measurement window. In this way, the terminal device does not measure the first E-UTRA MO, to avoid interruption of data transmission with the network device, thereby improving data transmission efficiency.

In some implementations, before receiving the first information from the network device, the terminal device may further report to the network device that the terminal device does not need a measurement gap to measure the first E-UTRA MO.

In an example, the terminal device may send second information to the network device, where the second information indicates that the terminal device supports E-UTRA measurement without a measurement gap when an E-UTRA CRS is fully contained within an active BWP of the terminal device. After the network device receives the second information, if the network device determines that an E-UTRA CRS (for example, the first E-UTRA MO) configured for the terminal device is fully contained within the active BWP of the terminal device, the network device may determine that a measurement gap is not needed for the E-UTRA MO for measurement. It may be understood that, that the E-UTRA MO is fully contained within the active BWP of the terminal device may mean that a frequency range corresponding to the E-UTRA MO is in or belongs to a frequency range of the active BWP of the terminal device, or the frequency range corresponding to the E-UTRA MO is a part or all of the frequency range of the active BWP of the terminal device.

The second information may be included in an inter-RAT no-gap measurement (interRAT-LTE-Meas-NoGap-NoInterr-r18) message (which may also be referred to as a capability message) in R18, and may be sent to the network device by using one message, or may be sent to the network device by using a plurality of messages. This is not limited in this application.

In another example, the second information may alternatively indicate one or more E-UTRA bands in which the terminal device does not need a measurement gap for E-UTRA measurement. For example, the terminal device may indicate, by using the second information, that a measurement gap is not needed in a first E-UTRA band for E-UTRA measurement, or that a measurement gap and an NCSG are not needed in the first E-UTRA band for E-UTRA measurement. The first E-UTRA MO configured by the network device for the terminal device corresponds to the first E-UTRA band, and the network device may determine that a measurement gap is not needed for the first E-UTRA MO for measurement. It may be understood that, that the first E-UTRA MO corresponds to the first E-UTRA band may mean that a frequency range corresponding to the first E-UTRA MO is in or belongs to the first E-UTRA band, or the frequency range corresponding to the first E-UTRA MO is a part or all of the first E-UTRA band.

The second information may be included in an information element of an EUTRA gap and NCSG need information (needForGapNCSG-InfoEUTRA) in an RRC reconfiguration complete (RRCReconfigurationComplete) message or an RRC resume complete (RRCResumeComplete) message, and may be sent to the network device by using one message, or may be sent to the network device by using a plurality of messages. This is not limited in this application.

In a possible implementation, the second information may be reported in a field or an indicator field of the measurement gap and NCSG need information in the RRC reconfiguration complete (RRCReconfigurationComplete) message or the RRC resume complete (RRCResumeComplete) message.

In a possible implementation, a band range (for example, the first E-UTRA band) reported by the terminal device may be requested by the network device, for example, may be determined depending on whether a measurement gap and an NCSG are needed for an E-UTRA target band for measurement in an RRC reconfiguration (RRCReconfiguration) message or an RRC resume (RRCResume) message delivered by the network device.

Table 2 is a schematic table of a relationship between a MO type, a measurement gap, and a measurement window. Different from the two cases in Table 1 in which the network device indicates (or configures) the measurement gap and the measurement window for the terminal device, or the network device indicates (or configures) only the measurement window for the terminal device, in this embodiment of this application, the network device may alternatively indicate (or configure) only a measurement window (corresponding to the fourth row in Table 2) to the terminal device when a MO that needs to be measured by the terminal device includes an E-UTRA MO that has scheduling restriction and for which a measurement gap is not needed for measurement. Under this configuration or indication, for an NR MO and an E-UTRA MO for which a measurement gap is needed for measurement, the terminal device performs measurement in the measurement gap. For an NR MO for which a measurement gap is not needed for measurement, the terminal device may determine, based on a time domain position of an SMTC corresponding to the NR MO, a time domain position at which measurement is to be performed. For the E-UTRA MO that has scheduling restriction and for which a measurement gap is not needed for measurement, the terminal device may perform, based on the measurement gap, measurement at a corresponding time domain position. For an E-UTRA MO that has no scheduling restriction and for which a measurement gap is not needed for measurement, the terminal device may perform measurement at any time domain position.

In addition, when the MO that needs to be measured by the terminal device includes the E-UTRA MO that has scheduling restriction and for which a measurement gap is not needed for measurement, the network device may not indicate (or configure) the measurement gap and the measurement window (corresponding to the fifth row in Table 2) to the terminal device. Under this configuration or indication, for the E-UTRA MO that has scheduling restriction and for which a measurement gap is not needed for measurement, the terminal device does not perform measurement. For the E-UTRA MO that has no scheduling restriction and for which a measurement gap is not needed for measurement, the terminal device may perform measurement at any time domain position.

Table 2

| Measurement gap (gap) | Measurement window (window) | NR MO (need for gap) | NR MO (no need for gap) | E-UTRA MO (need for gap) | E-UTRA MO (no need for gap and having restriction) | E-UTRA MO (no need for gap and having no restriction) |
| --- | --- | --- | --- | --- | --- | --- |
| Configured | Configured | Gap | Determined based on an SMTC position | Gap | Window | Any time domain position |
| Not configured | Configured | Not present | | Not present | Window | Any time domain position |
| Configured | Not configured | Gap | | Gap | Gap | Any time domain position |
| Not configured | Not configured | Not present | | Not present | Not measured | Any time domain position |

In some implementations, in a scenario in which the network device indicates (or configures) the measurement gap and the measurement window, a first measurement occasion corresponding to the measurement gap may collide with a second measurement occasion corresponding to the measurement window. In this embodiment of this application, collision between the measurement gap and the measurement window may be avoided, or a behavior of the terminal device in a collision scenario may be defined, to resolve a problem of how to measure a MO in a scenario in which the network device indicates (or configures) the measurement gap and the measurement window.

FIG. 5 is a diagram of another measurement method according to an embodiment of this application. The method includes the following steps.

S501: A network device sends third information to a terminal device, and correspondingly, the terminal device receives the third information. The third information indicates (or is used for configuring) a measurement gap and a measurement window, the measurement gap corresponds to at least one first measurement occasion, and the measurement window corresponds to at least one second measurement occasion.

In this embodiment of this application, the at least one measurement occasion corresponding to the measurement gap may be determined based on a measurement gap configuration, for example, determined based on one or more of a measurement gap repetition period (measurement gap repetition period, MGRP), measurement gap duration or a measurement gap length (measurement gap length, MGL), and a measurement gap offset (gapOffset) used to configure a start position of the measurement gap. The at least one second measurement occasion corresponding to the measurement window may be determined based on a measurement window configuration, for example, determined based on one or more of a measurement window periodicity, a measurement window offset, and window duration of the measurement window.

S502: When the at least one first measurement occasion does not collide with the at least one second measurement occasion, the terminal device performs measurement based on the at least one first measurement occasion and the at least one second measurement occasion.

In this embodiment of this application, the network device may control a time domain position of the at least one first measurement occasion corresponding to the measurement gap and a time domain position of the at least one second measurement occasion corresponding to the measurement window, to avoid collision between measurement occasions corresponding to the measurement gap and the measurement window.

For example, the at least one first measurement occasion corresponding to the measurement slot configured by the network device for the terminal device usually includes duration of an SMTC corresponding to an NR MO that needs to be measured, so that the terminal device measures the NR MO on the at least one first measurement occasion corresponding to the measurement slot. Therefore, in some implementations, a measurement window offset may be set based on an SMTC configuration, to avoid the collision between the measurement occasions corresponding to the measurement gap and the measurement window.

For example, the measurement window periodicity is an integer multiple of an SMTC periodicity, and the measurement window offset of the measurement window may satisfy Formula 1: (n-1)*smtc_periodicity+smtc_offset+smtc_duration≤window_offset≤n*smtc_periodicity+smtc_offs et-window_duration.

For example, an SMTC periodicity is an integer multiple of the measurement window periodicity, and the measurement window offset of the measurement window may satisfy Formula 2: (n-1)*window_periodicity+window_offset+window_duration≤smtc_offset≤n*window_periodicity+ window_offset-smtc_duration. window_offset represents the measurement window offset, smtc_offset represents an SMTC offset, window_duration represents the window duration of the measurement window, smtc_periodicity represents the SMTC periodicity, smtc_duration represents SMTC duration, window_periodicity represents the measurement window periodicity, n=0, 1, 2, ..., or the like, and the measurement gap is determined based on smtc_offset, smtc_periodicity, and smtc_duration.

It should be understood that the measurement window offset may be greater than or equal to 0, and is less than or equal to a difference between the measurement window periodicity and the window duration of the measurement window. Similarly, the SMTC offset may be greater than or equal to 0, and is less than or equal to a difference between the SMTC periodicity and the SMTC duration.

In some implementations, when the measurement window periodicity is an integer multiple of the SMTC periodicity, a value of n may be a natural number not greater than a ratio of the measurement window periodicity to the SMTC periodicity. When the SMTC periodicity is an integer multiple of the measurement window periodicity, a value of n may be a natural number not greater than a ratio of the SMTC periodicity to the measurement window.

Optionally, to avoid the measurement window offset being not in a measurement window periodicity range, the measurement window offset of the measurement window may satisfy both the foregoing Formula 1 or Formula 2, and a condition that the measurement window offset is greater than or equal to 0 and is less than or equal to the difference between the measurement window periodicity and the window duration of the measurement window.

According to the foregoing formula, it may be specified that the measurement window needs to end before the SMTC starts, and the measurement window can be started only after the SMTC ends. Therefore, after the SMTC configuration is fixed, a time domain position of a measurement window (that is, a measurement occasion corresponding to the measurement window) is placed in a middle gap (that is, a middle time domain position) of the SMTC. This configuration manner is applicable when the SMTC periodicity and the measurement window periodicity are in a multiple relationship (for example, the SMTC periodicity is a multiple of the measurement window periodicity, or the measurement window periodicity is a multiple of the SMTC). In addition, for separation, in some implementations, a distance between any SMTC and a measurement window (that is, a measurement occasion corresponding to the measurement window) may be required to be greater than 4 ms, to ensure that the terminal device has sufficient switching time when the terminal device has a requirement for switching an SCS, an operating band (or a frequency), or the like.

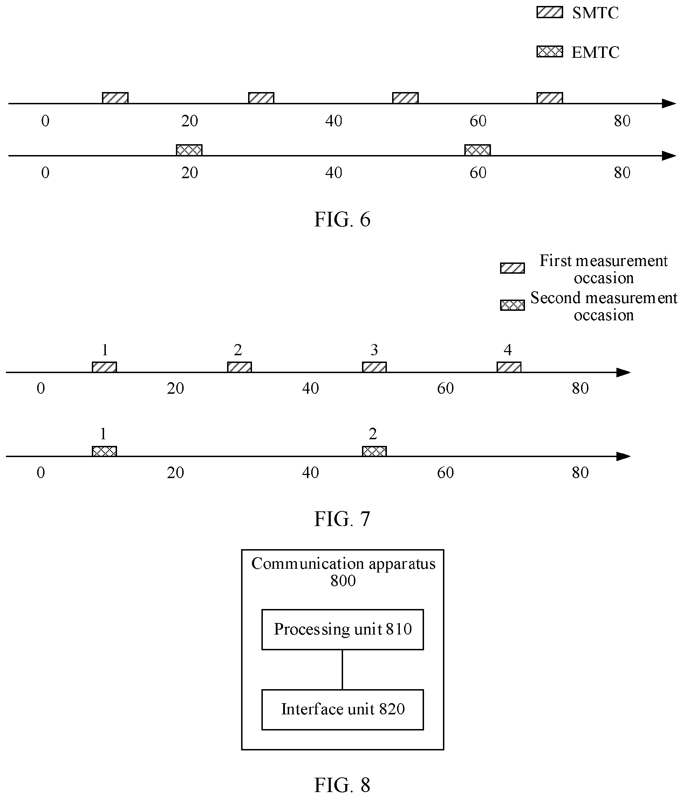

Refer to FIG. 6. An example in which an SMTC periodicity is 20 ms, an SMTC offset is 9 ms, SMTC duration is 2 ms, a measurement window periodicity is 40 ms, and window duration of a measurement window is 2 ms is used. A value of n may be 0, 1, or 2. When n is 0, according to (n-1)*smtc_periodicity+smtc_offset+smtc_duration≤window_offset≤n*smtc_periodicity+smtc_offs et-window_duration, it can be learned that window_offset may be a value greater than or equal to -9 and less than or equal to 7. When n is 1, according to (n-1)*smtc_periodicity+smtc_offset+smtc_duration≤window_offset≤n*smtc_periodicity+smtc_offs et-window_duration, it can be learned that window_offset may be a value greater than or equal to 11 and less than or equal to 27. When n is 2, according to (n-1)*smtc_periodicity+smtc_offset+smtc_duration≤window_offset≤n*smtc_periodicity+ smtc_offset-window_duration, it can be learned that window_offset may be a value greater than or equal to 31 and less than or equal to 47. In conclusion, when n is 0, 1, or 2, window_offset may be a value greater than or equal to -9 and less than or equal to 7, a value greater than or equal to 11 and less than or equal to 27, or a value greater than or equal to 31 and less than or equal to 47.

Optionally, to avoid the measurement window offset being not in a measurement window periodicity range, window_offset (that is, the measurement window offset) is greater than or equal to 0 and is less than or equal to 40 (the measurement window periodicity)-2 (the window duration of the measurement window). For example, with reference to the condition, when a value of n is 0, 1, or 2, window_offset may be a value greater than or equal to 0 and less than or equal to 7, a value greater than or equal to 11 and less than or equal to 27, or a value greater than or equal to 31 and less than or equal to 38. In FIG. 6, an example in which window_offset is equal to 19 is used. In FIG. 6, an EMTC represents a measurement window (or a measurement occasion corresponding to the measurement window).

It should be understood that, in some implementations, the foregoing SMTC may alternatively be a measurement gap, that is, the SMTC offset (smtc_offset), the SMTC periodicity (smtc_periodicity), and the SMTC duration (smtc_duration) may be a measurement gap offset, a measurement gap periodicity (or a measurement gap repetition period), or measurement gap duration.

S503: When a first target measurement occasion collides with a second target measurement occasion, the terminal device measures a MO based on one or more of the following: a priority of the measurement gap and a priority of the measurement window, a quantity of first measurement occasions corresponding to the measurement gap and a quantity of second measurement occasions corresponding to the measurement window, a measurement gap proportion coefficient for each type of MO, and the like.

The first target measurement occasion belongs to the at least one first measurement occasion, and the second target measurement occasion belongs to the at least one second measurement occasion.

It may be understood that that the first target measurement occasion collides with the second target measurement occasion may mean that a time domain position of the first target measurement occasion partially or completely overlaps a time domain position of the second target measurement occasion, or an interval between the time domain position of the first target measurement occasion and the time domain position of the second target measurement occasion is less than an interval threshold.

Implementation 1: When the first target measurement occasion collides with the second target measurement occasion, if a MO that needs to be measured by the terminal device includes an NR MO that has scheduling restriction (for example, an NR MO for which a measurement gap is needed for measurement), the terminal device may discard the second target measurement occasion, or measure the MO based on the first target measurement occasion. For example, the NR MO that has scheduling restriction is measured based on the first target measurement occasion. It may be understood that discarding in this embodiment of this application may also be understood as dropping, abandoning, or the like, and no additional description is provided.

Alternatively, when the first target measurement occasion collides with the second target measurement occasion, if a MO that needs to be measured by the terminal device includes an NR MO that has scheduling restriction, the terminal device may discard inter-RAT E-UTRA measurement. For example, when the first target measurement occasion collides with the second target measurement occasion, if the MO that needs to be measured by the terminal device includes the NR MO that has scheduling restriction, the terminal device may discard the second target measurement occasion used for E-UTRA measurement, or measure the MO based on the first target measurement occasion. For example, the NR MO that has scheduling restriction is measured based on the first target measurement occasion.

In other words, when the measurement window is configured overlapped with SMTC/SSB/channel state information-reference signal (channel state information-reference signal, CSI-RS) measurement, and when NR measurement causes scheduling restriction, inter-RAT E-UTRA measurement is to be dropped (when EMW is configured overlapped with SMTC/SSB/CSI-RS measurement and when NR measurement causes scheduling restriction, inter-RAT LTE measurement will be dropped).

In an example, refer to FIG. 7. An example in which the measurement gap corresponds to four first measurement occasions (first measurement occasions 1 to 4) and the measurement window corresponds to two second measurement occasions (second measurement occasions 1 and 2) is used. The second measurement occasion 1 collides with the first measurement occasion 1. If the MO that needs to be measured by the terminal device includes the NR MO that has scheduling restriction, the terminal device may measure, based on the first measurement occasion 1, the NR MO that has scheduling restriction. Similarly, the second measurement occasion 2 collides with the first measurement occasion 3. If the MO that needs to be measured by the terminal device includes the NR MO that has scheduling restriction, the terminal device may measure, based on the first measurement occasion 3, the NR MO that has scheduling restriction.

Implementation 2: When the first target measurement occasion collides with the second target measurement occasion, the terminal device may discard the second target measurement occasion, or measure the MO based on the first target measurement occasion. For example, the NR MO that has scheduling restriction is measured based on the first target measurement occasion.

Alternatively, when the first target measurement occasion collides with the second target measurement occasion, the terminal device may discard inter-RAT E-UTRA measurement. For example, when the first target measurement occasion collides with the second target measurement occasion, the terminal device may discard the second target measurement occasion used for E-UTRA measurement, or measure the MO based on the first target measurement occasion. For example, the NR MO that has scheduling restriction is measured based on the first target measurement occasion.

Implementation 3: If the measurement gap is indicated (or configured), but no measurement window is configured, or if the measurement gap and the measurement window are indicated (or configured), but the first target measurement occasion in the first measurement occasion corresponding to the measurement gap collides with the second target measurement occasion in the second measurement occasion corresponding to the measurement window, the terminal device may measure an inter-RAT E-UTRA MO that has scheduling restriction. It may be understood that, if the measurement gap and the measurement window are indicated (or configured), the terminal device may measure, when the first target measurement occasion collides with the second target measurement occasion, the inter-RAT E-UTRA MO that has scheduling restriction, to resolve a problem of how the terminal device performs measurement when the first target measurement occasion collides with the second target measurement occasion.

For example, the network device indicates (or configures) the measurement gap, but does not configure the measurement window. The terminal device may measure, based on the first measurement occasion corresponding to the measurement gap, the inter-RAT E-UTRA MO that has scheduling restriction.

The network device indicates (or configures) the measurement gap and the measurement window, but the first target measurement occasion in the first measurement occasion corresponding to the measurement gap collides with the second target measurement occasion in the second measurement occasion corresponding to the measurement window. The terminal device may measure, based on the first target measurement occasion (or the second target measurement occasion), the inter-RAT E-UTRA MO that has scheduling restriction. When the first target measurement occasion collides with the second target measurement occasion, whether the terminal device measures, based on the first target measurement occasion or based on the second target measurement occasion, the inter-RAT E-UTRA MO that has scheduling restriction may be defined by a protocol or the like, may be configured by the network device, or may be independently determined by the terminal device. This is not limited in this application.

Implementation 4: An example in which when the first target measurement occasion collides with the second target measurement occasion, the terminal device measures the MO based on the priority of the measurement gap and the priority of the measurement window is used. In a possible implementation, when the priority of the measurement gap is higher than or equal to the priority of the measurement window, the terminal device may measure the MO based on the first target measurement occasion. For example, an NR MO or the like for which a measurement gap is needed for measurement is measured on the first target measurement occasion. When the priority of the measurement gap is lower than the priority of the measurement window, the terminal device may measure the MO based on the second target measurement occasion. For example, the terminal device may measure, on the second measurement occasion, an E-UTRA MO or the like that has scheduling restriction and for which a measurement gap is not needed for measurement.

In addition, it may be understood that when the priority of the measurement gap is equal to the priority of the measurement window, the terminal device may alternatively measure the MO based on the second target measurement occasion. In this application, when the priority of the measurement gap is equal to the priority of the measurement window, a target measurement occasion selected by the terminal device for MO measurement may not be limited.

The priority of the measurement gap and the priority of the measurement window may be defined by a protocol or the like, or may be indicated (or configured) by the network device to the terminal device. A manner in which the terminal device obtains the priority of the measurement gap and the priority of the measurement window is not limited in this application.

In an example, the network device may send, to the terminal device, fourth information that indicates the priority of the measurement gap and/or the priority of the measurement window, to indicate (or configure) the priority of the measurement gap and/or the priority of the measurement window to the terminal device.

Implementation 5: An example in which when the first target measurement occasion collides with the second target measurement occasion, the terminal device measures the MO based on the quantity of first measurement occasions corresponding to the measurement gap and the quantity of second measurement occasions corresponding to the measurement window is used. In a possible implementation, when the quantity of first measurement occasions corresponding to the measurement gap is greater than or equal to the quantity of second measurement occasions corresponding to the measurement window, the terminal device measures the MO based on the second target measurement occasion. When the quantity of first measurement occasions corresponding to the measurement gap is less than the quantity of second measurement occasions corresponding to the measurement window, the terminal device measures the MO based on the first target measurement occasion.

Refer to FIG. 7. An example in which the measurement gap corresponds to four first measurement occasions (the first measurement occasions 1 to 4) and the measurement window corresponds to two second measurement occasions (the second measurement occasions 1 and 2) is used. The second measurement occasion 1 collides with the first measurement occasion 1, and the second measurement occasion 2 collides with the first measurement occasion 3. The terminal device may measure, on the first measurement occasions 2 and 4, the NR MO or the like for which a measurement gap is needed for measurement; and may measure, on the second measurement occasions 1 and 2, the E-UTRA MO or the like that has scheduling restriction and for which a measurement gap is not needed for measurement. The MO may be measured based on the quantity of first measurement occasions corresponding to the measurement gap and the quantity of second measurement occasions corresponding to the measurement window, to satisfy measurement requirements of the terminal device for measuring the MO in the measurement gap and the measurement window.

It may be understood that when the quantity of first measurement occasions corresponding to the measurement gap is equal to the quantity of second measurement occasions corresponding to the measurement window, the terminal device may alternatively measure the MO based on the first target measurement occasion. In this application, when the priority of the measurement gap is equal to the priority of the measurement window, a target measurement occasion selected by the terminal device for MO measurement may not be limited.

Implementation 6: An example in which when the first target measurement occasion collides with the second target measurement occasion, the terminal device measures the MO based on the measurement gap proportion coefficient for each type of MO is used. In a possible implementation, the terminal device may determine, based on a first measurement gap proportion coefficient for an intra-frequency MO, a second measurement gap proportion coefficient for an inter-frequency MO or an inter-RAT MO other than an E-UTRA MO that has scheduling restriction, and a third measurement gap proportion coefficient for the E-UTRA MO that has scheduling restriction, a target type of a MO corresponding to the first target measurement occasion, and measure the MO of the target type on the first target measurement occasion.

A current measurement gap sharing scheme (MeasGapSharingScheme) defines four proportions of a measurement gap used for intra-frequency measurement to an entire measurement gap. Refer to Table 3. A parameter X represents a measurement gap proportion coefficient used for intra-frequency measurement when the measurement gap sharing scheme is used. There are four values of the parameter X based on different values of MeasGapSharingScheme. When MeasGapSharingScheme is '00', the measurement gap is equally split (equal splitting), and the parameter X is not used. When MeasGapSharingScheme is '01', '10', and '11', parameters X are respectively 25, 50, and 75. X% represents a proportion of the measurement gap used for the intra-frequency measurement, and remaining (100-X)% of the measurement gap is used for inter-frequency and inter-RAT (that is, inter-RAT) measurement.

Table 3

| measGapSharingConfig | X (%) |
|---|---|
| '00' | Equal splitting |
| '01' | 25 |
| '10' | 50 |
| '11' | 75 |

In this embodiment of this application, it is considered that when there is collision between measurement occasions of the measurement gap and the measurement window, a current inter-frequency and inter-RAT (that is, inter-RAT) measurement proportion may be further divided into a part for measurement of the inter-frequency MO or the inter-RAT MO other than the E-UTRA MO that has scheduling restriction, and a part for measurement of the E-UTRA MO that has scheduling restriction.

In a possible implementation, the first measurement gap proportion coefficient is X, the second measurement gap proportion coefficient is 100-X-Y, and the third measurement gap proportion coefficient is Y. In other words, for the first target measurement occasion on which the measurement gap collides with the measurement window, X% of the first target measurement occasion is used for intra-frequency MO measurement, (100-X-Y)% of the first target measurement occasion is used for measurement of the inter-frequency MO or the inter-RAT MO other than the E-UTRA MO that has scheduling restriction, and Y% of the first target measurement occasion is used for measurement of the E-UTRA MO that has scheduling restriction. X and Y are natural numbers, and X+Y is less than or equal to 100. X and Y may be defined in a protocol or the like, or may be indicated (or configured) by the network device to the terminal device. This is not limited in this application.

For example, X is 25, Y is 25, and 100-X-Y is equal to 50. The terminal device may determine that a 1st first target measurement occasion is used for intra-frequency MO measurement, 2nd and 3rd first target measurement occasions are used for measurement of the inter-frequency MO or the inter-RAT MO other than the E-UTRA MO that has scheduling restriction, and a 4th first target measurement occasion is used for measurement of the E-UTRA MO that has scheduling restriction. The rest may be deduced by analogy, a 5th first target measurement occasion is used for intra-frequency MO measurement, and so on.

In addition, it may be understood that X and Y may alternatively be values from 0 to 1, that is, may be specific proportion values. For example, the first measurement gap proportion coefficient X is 0.25 (or 25%), the third measurement gap proportion coefficient Y is 0.10 (or 10%), and the second measurement gap proportion coefficient 1-X-Y is 0.65 (or 65%).

In another possible implementation, the first measurement gap proportion coefficient is X, the second measurement gap proportion coefficient is (100-X)*Q%, and the third measurement gap proportion coefficient is (100-X)*(100-Q)%. In other words, for the first target measurement occasion on which the measurement gap collides with the measurement window, X% of the first target measurement occasion is used for intra-frequency MO measurement, (100-X)%*Q% of the first target measurement occasion is used for measurement of the inter-frequency MO or the inter-RAT MO other than the E-UTRA MO that has scheduling restriction, and (100-X)%*(100-Q)% of the first target measurement occasion is used for measurement of the E-UTRA MO that has scheduling restriction. X and Q are natural numbers less than or equal to 100. X and Q may be defined in a protocol or the like, or may be indicated (or configured) by the network device to the terminal device. This is not limited in this application.

In addition, it may be understood that X and Q may alternatively be values from 0 to 1, that is, may be specific proportion values. For example, the first measurement gap proportion coefficient X is 0.25, the second measurement gap proportion coefficient (1-X)*Q is (1-0.25)*0.90, and the second measurement gap proportion coefficient (1-X)*(1-Q) is (1-0.25)*(1-0.90).

The following describes a communication apparatus provided in this embodiment of this application. FIG. 8 is a diagram of a structure of a communication apparatus according to an embodiment of this application. The communication apparatus may include units or modules corresponding to all or a part of steps in the foregoing method embodiments, and may be configured to perform the steps performed by the terminal device or the network device in the foregoing embodiments. For details, refer to related descriptions in the foregoing method embodiments.

As shown in FIG. 8, the communication apparatus 800 includes a processing unit 810 and an interface unit 820. The processing unit 810 may be a processor or a processing circuit, and the interface unit 820 may alternatively be a transceiver unit or an input/output interface. The communication apparatus 800 may be configured to implement the steps performed by the terminal device or the network device in the foregoing embodiments.

When the communication apparatus 800 is configured to implement the steps performed by the terminal device in the foregoing embodiment,

the interface unit 820 is configured to receive first information from a network device; and the processing unit 810 is configured to: measure a first evolved E-UTRA MO based on a measurement gap when the first information indicates the measurement gap and does not indicate a measurement window, where the first E-UTRA MO is an E-UTRA MO that has scheduling restriction and for which a measurement gap is not needed for measurement; and control not to measure the first E-UTRA MO when the first information does not indicate the measurement gap and does not indicate the measurement window.

In a possible design, before receiving the first information from the network device, the interface unit 820 is further configured to send second information to the network device. The second information indicates that the communication apparatus supports E-UTRA measurement without the measurement gap when an E-UTRA CRS is fully contained within an active BWP of the communication apparatus. The first E-UTRA MO is fully contained within the BWP. Alternatively, the second information indicates that a measurement gap is not needed in a first E-UTRA band for E-UTRA measurement, and the first E-UTRA MO corresponds to the first E-UTRA band.

In a possible design, the measurement gap indicated by the first information is determined based on an NR MO or a second E-UTRA MO that is configured by the network device for the communication apparatus and for which a measurement gap is needed for measurement.

In a possible design, the interface unit 820 is configured to receive third information from the network device. The third information indicates a measurement gap and a measurement window, the measurement gap corresponds to at least one first measurement occasion, and the measurement window corresponds to at least one second measurement occasion. The processing unit 810 is configured to: when a first target measurement occasion collides with a second target measurement occasion, measure a MO based on one or more of the following: a priority of the measurement gap and a priority of the measurement window, a quantity of first measurement occasions corresponding to the measurement gap and a quantity of second measurement occasions corresponding to the measurement window, and a measurement gap proportion coefficient for each type of MO. The first target measurement occasion belongs to the at least one first measurement occasion, and the second target measurement occasion belongs to the at least one second measurement occasion.

In a possible design, during measuring the MO based on the priority of the measurement gap and the priority of the measurement window when the first target measurement occasion collides with the second target measurement occasion, the processing unit 810 is specifically configured to: measure the MO based on the first target measurement occasion when the priority of the measurement gap is higher than or equal to the priority of the measurement window; or measure the MO based on the second target measurement occasion when the priority of the measurement gap is lower than the priority of the measurement window.

In a possible design, the interface unit 820 is further configured to receive fourth information from the network device. The fourth information indicates the priority of the measurement gap and/or the priority of the measurement window.

In a possible design, during measuring the MO based on the quantity of first measurement occasions corresponding to the measurement gap and the quantity of second measurement occasions corresponding to the measurement window when the first target measurement occasion collides with the second target measurement occasion, the processing unit 810 is specifically configured to: measure the MO based on the second target measurement occasion when the quantity of first measurement occasions corresponding to the measurement gap is greater than or equal to the quantity of second measurement occasions corresponding to the measurement window; and measure the MO based on the first target measurement occasion when the quantity of first measurement occasions corresponding to the measurement gap is less than the quantity of second measurement occasions corresponding to the measurement window.

In a possible design, during measuring the MO based on the measurement gap proportion coefficient for each type of MO when the first target measurement occasion collides with the second target measurement occasion, the processing unit 810 is specifically configured to measure a MO of a target type on the first target measurement occasion. The MO of the target type is determined based on a first measurement gap proportion coefficient for an intra-frequency MO, a second measurement gap proportion coefficient for an inter-frequency MO or an inter-RAT MO other than an E-UTRA MO that has scheduling restriction, and a third measurement gap proportion coefficient for the E-UTRA MO that has scheduling restriction.

For example, the first measurement gap proportion coefficient is X, the second measurement gap proportion coefficient is 100-X-Y, and the third measurement gap proportion coefficient is Y. X and Y are natural numbers, and X+Y is less than or equal to 100.

For example, the first measurement gap proportion coefficient is X, the second measurement gap proportion coefficient is (100-X)*Q%, the third measurement gap proportion coefficient is (100-X)*(100-Q)%, and X and Q are natural numbers less than or equal to 100.

When the communication apparatus 800 is configured to implement the steps performed by the network device in the foregoing embodiments, the processing unit 810 is used to configure a first E-UTRA MO for the terminal device, where the first E-UTRA MO is an E-UTRA MO that has scheduling restriction and for which a measurement gap is not needed for measurement. The interface unit 820 is configured to send first information to the terminal device, where the first information indicates a measurement gap and does not indicate a measurement window, or the first information does not indicate the measurement gap and does not indicate the measurement window.

In a possible design, the interface unit 820 is further configured to receive second information from the terminal device before the processing unit 810 configures the first E-UTRA MO for the terminal device. The second information indicates that the terminal device supports E-UTRA measurement without the measurement gap when an E-UTRA CRS is fully contained within an active BWP of the terminal device, where the first E-UTRA MO is fully contained within the BWP. Alternatively, the second information indicates that a measurement gap is not needed in a first E-UTRA band for E-UTRA measurement, and the first E-UTRA MO corresponds to the first E-UTRA band.

In a possible design, the measurement gap indicated by the first information is determined based on a new radio NR MO or a second E-UTRA MO that is configured for the terminal device and for which a measurement gap is needed for measurement.

In a possible design, the interface unit 820 is configured to send third information to the terminal device. The third information indicates a measurement gap and a measurement window, the measurement gap corresponds to at least one first measurement occasion, the measurement window corresponds to at least one second measurement occasion, and the at least one first measurement occasion does not collide with the at least one second measurement occasion.

In a possible design, when a measurement window periodicity of the measurement window is an integer multiple of an SMTC periodicity, a measurement window offset of the measurement window satisfies: (n-1)*smtc_periodicity+smtc_offset+smtc_duration≤window_offset≤n*smtc_periodicity+smtc_offset-window_duration. When the SMTC periodicity is an integer multiple of the measurement window periodicity, the measurement window offset of the measurement window satisfies: (n-1)*window_periodicity+window_offset+window_duration≤smtc_offset≤n*window_periodicity+ window_offset-smtc_duration. window_offset represents the measurement window offset, smtc_offset represents an SMTC offset, window_duration represents window duration of the measurement window, smtc_periodicity represents the SMTC periodicity, smtc_duration represents SMTC duration, and window_periodicity represents the measurement window periodicity. n=0, 1, 2, ..., or the like, and the measurement gap is determined based on smtc_offset, smtc_periodicity, and smtc_duration.

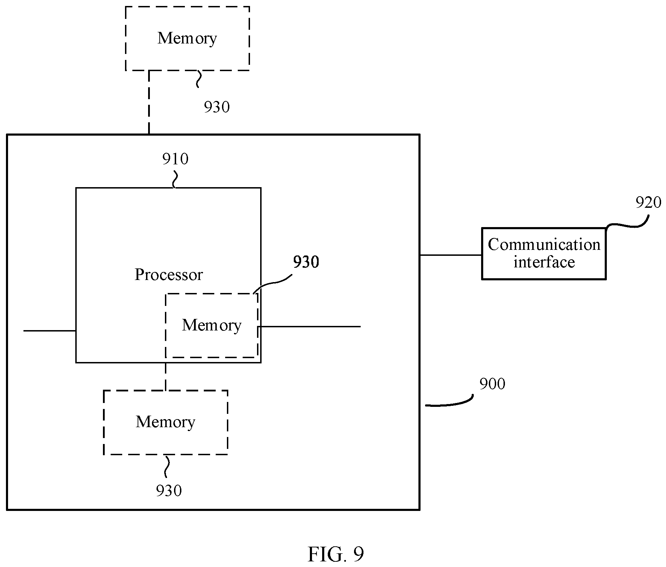

As shown in FIG. 9, this application further provides a communication apparatus 900, including a processor 910 and further including a communication interface 920. The processor 910 and the communication interface 920 are coupled to each other. It may be understood that the communication interface 920 may be a transceiver, an input/output interface, an input interface, an output interface, an interface circuit, or the like. Optionally, the communication apparatus 900 may further include a memory 930, configured to: store instructions executed by the processor 910, store input data required by the processor 910 to run instructions, or store data generated after the processor 910 runs instructions. The memory 930 may be a physically independent unit, or may be coupled to the processor 910, or the processor 910 includes the memory 930.

When the communication apparatus 900 is configured to implement the steps performed by the terminal device or the network device in the foregoing embodiments, the processor 910 may be configured to implement a function of the processing unit 810, and the communication interface 920 may be configured to implement a function of the interface unit 820.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a logic circuit, a field programmable gate array (field programmable gate array, FPGA), or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in the network device or the terminal device. Certainly, the processor and the storage medium may alternatively exist as discrete components in the network device or the terminal device.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or transmitted from one computer-readable storage medium to another computer-readable storage medium. For example, the computer program or instructions may be transmitted from one network device, terminal, computer, server, or data center to another network device, terminal, computer, server, or data center in a wired or wireless manner. The computer-readable storage medium may be any usable medium that can be accessed by the computer, or a data storage device like a server or a data center, integrating one or more usable media. The usable medium may be a magnetic medium like a floppy disk, a hard disk drive, or a magnetic tape; may be an optical medium like a digital video disc; or may be a semiconductor medium like a solid-state drive. The computer-readable storage medium may be a volatile or non-volatile storage medium, or may include two types of storage media: a volatile storage medium and a non-volatile storage medium.

In various embodiments of this application, unless otherwise specified or there is a logic conflict, terms and/or descriptions in different embodiments are consistent and may be mutually referenced, and technical features in different embodiments may be combined based on an internal logical relationship thereof to form a new embodiment.

In addition, it should be understood that the term "for example" in embodiments of this application is used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1.  A measurement method, comprising:

   receiving, by a terminal device, first information from a network device; and

measuring, by the terminal device, a first evolved universal terrestrial radio access E-UTRA measurement object MO based on a measurement gap when the first information indicates the measurement gap and does not indicate a measurement window, wherein the first E-UTRA MO is an E-UTRA MO that has scheduling restriction and for which a measurement gap is not needed for measurement; and

skipping, by the terminal device, measuring the first E-UTRA MO when the first information does not indicate the measurement gap and does not indicate the measurement window.

2. The method according to claim 1, wherein before receiving, by the terminal device, the first information from the network device, the method further comprises:

sending, by the terminal device, second information to the network device, wherein the second information indicates that the terminal device supports E-UTRA measurement without a measurement gap when an E-UTRA cell reference signal CRS is fully contained within an active bandwidth part BWP of the terminal device, wherein the first E-UTRA MO is fully contained within the BWP; or

the second information indicates that a measurement gap is not needed in a first E-UTRA band band for E-UTRA measurement, and the first E-UTRA MO corresponds to the first E-UTRA band.

3. The method according to claim 1 or 2, wherein the measurement gap indicated by the first information is determined based on a new radio NR MO or a second E-UTRA MO that is configured by the network device for the terminal device and for which a measurement gap is needed for measurement.

4. A measurement method, comprising:

receiving, by a terminal device, third information from a network device, wherein the third information indicates a measurement gap and a measurement window, the measurement gap corresponds to at least one first measurement occasion, and the measurement window corresponds to at least one second measurement occasion; and

when a first target measurement occasion collides with a second target measurement occasion, measuring, by the terminal device, a MO based on one or more of the following: a priority of the measurement gap and a priority of the measurement window, a quantity of first measurement occasions corresponding to the measurement gap and a quantity of second measurement occasions corresponding to the measurement window, and a measurement gap proportion coefficient for each type of measurement object MO, wherein the first target measurement occasion belongs to the at least one first measurement occasion, and the second target measurement occasion belongs to the at least one second measurement occasion.

5. The method according to claim 4, wherein when the first target measurement occasion collides with the second target measurement occasion, measuring, by the terminal device, the MO based on the priority of the measurement gap and the priority of the measurement window comprises:

measuring, by the terminal device, the MO based on the first target measurement occasion when the priority of the measurement gap is higher than or equal to the priority of the measurement window; and

measuring, by the terminal device, the MO based on the second target measurement occasion when the priority of the measurement gap is lower than the priority of the measurement window.

6. The method according to claim 5, wherein the method further comprises:
receiving, by the terminal device, fourth information from the network device, wherein the fourth information indicates the priority of the measurement gap and/or the priority of the measurement window.

7. The method according to claim 4, wherein when the first target measurement occasion collides with the second target measurement occasion, measuring, by the terminal device, the MO based on the quantity of first measurement occasions corresponding to the measurement gap and the quantity of second measurement occasions corresponding to the measurement window comprises:

measuring, by the terminal device, the MO based on the second target measurement occasion when the quantity of first measurement occasions corresponding to the measurement gap is greater than or equal to the quantity of second measurement occasions corresponding to the measurement window; and

measuring, by the terminal device, the MO based on the first target measurement occasion when the quantity of first measurement occasions corresponding to the measurement gap is less than the quantity of second measurement occasions corresponding to the measurement window.

8. The method according to claim 4, wherein when the first target measurement occasion collides with the second target measurement occasion, measuring, by the terminal device, the MO based on the measurement gap proportion coefficient for each type of MO comprises:
measuring, by the terminal device, a MO of a target type on the first target measurement occasion, wherein the MO of the target type is determined based on a first measurement gap proportion coefficient for an intra-frequency MO, a second measurement gap proportion coefficient for an inter-frequency MO or an inter-RAT MO other than an evolved universal terrestrial radio access E-UTRA MO that has scheduling restriction, and a third measurement gap proportion coefficient for the E-UTRA MO that has scheduling restriction.

9. The method according to claim 8, wherein the first measurement gap proportion coefficient is X, the second measurement gap proportion coefficient is 100-X-Y, the third measurement gap proportion coefficient is Y, X and Y are natural numbers, and X+Y is less than or equal to 100; or
the first measurement gap proportion coefficient is X, the second measurement gap proportion coefficient is (100-X) *Q%, the third measurement gap proportion coefficient is (100-X)*(100-Q)%, and X and Q are natural numbers less than or equal to 100.

10. A measurement method, comprising:

configuring, by a network device, a first evolved universal terrestrial radio access E-UTRA measurement object MO for a terminal device, wherein the first E-UTRA MO is an E-UTRA MO that has scheduling restriction and for which a measurement gap is not needed for measurement; and
sending, by the network device, first information to the terminal device, wherein the first information indicates a measurement gap and does not indicate a measurement window, or the first information does not indicate the measurement gap and does not indicate the measurement window.

11. The method according to claim 10, wherein before configuring, by the network device, the first E-UTRA MO for the terminal device, the method further comprises:

receiving, by the network device, second information from the terminal device, wherein the second information indicates that the terminal device supports E-UTRA measurement without a measurement gap when an E-UTRA cell reference signal CRS is fully contained within an active bandwidth part BWP of the terminal device, wherein the first E-UTRA MO is fully contained within the BWP; or
the second information indicates that a measurement gap is not needed in a first E-UTRA band band for E-UTRA measurement, and the first E-UTRA MO corresponds to the first E-UTRA band.

12. The method according to claim 10 or 11, wherein the measurement gap indicated by the first information is determined based on a new radio NR MO or a second E-UTRA MO that is configured by the network device for the terminal device and for which a measurement gap is needed for measurement.

13. A measurement method, comprising:
sending, by a network device, third information to a terminal device, wherein the third information indicates a measurement gap and a measurement window, the measurement gap corresponds to at least one first measurement occasion, the measurement window corresponds to at least one second measurement occasion, and the at least one first measurement occasion does not collide with the at least one second measurement occasion.

14. The method according to claim 13, wherein when a measurement window periodicity of the measurement window is an integer multiple of a synchronization signal/physical broadcast channel block SSB-based measurement timing configuration SMTC periodicity, a measurement window offset of the measurement window satisfies:

$(n-1)*smtc\_periodicity+smtc\_offset+smtc\_duration\leq window\_offset\leq n*smtc\_periodicity+smtc\_offs\qquad et-window\_-duration$; and when the SMTC periodicity is an integer multiple of the measurement window periodicity, the measurement window offset of the measurement window satisfies:

(n-1)*window_periodicity+window_offset+window_duration≤smtc_offset≤n*window_periodicity+ window_offset-smtc_duration, wherein window_offset represents the measurement window offset, smtc_offset represents an SMTC offset, window_duration represents window duration of the measurement window, smtc_periodicity represents the SMTC periodicity, smtc_duration represents SMTC duration, window_periodicity represents the measurement window periodicity, n=0, 1, 2, ..., or the like, and the measurement gap is determined based on smtc_offset, smtc_periodicity, and smtc_duration.

15. A communication apparatus, comprising a unit or module configured to perform the method according to any one of claims 1 to 14.

16. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 14 by using a logic circuit or by executing instructions.

17. A computer program product, comprising a computer program or instructions, wherein when the computer program or the instructions are executed by a processor, the method according to any one of claims 1 to 14 is implemented.

18. A computer-readable storage medium, wherein the storage medium stores a computer program or instructions, and when the computer program or the instructions are executed by a processor, the method according to any one of claims 1 to 14 is implemented.

19. A measurement system, comprising a terminal device and a network device, wherein

the terminal device is configured to implement the method according to any one of claims 1 to 3; and
the network device is configured to implement the method according to any one of claims 10 to 12.

20. A measurement system, comprising a terminal device and a network device, wherein

the terminal device is configured to implement the method according to any one of claims 4 to 9; and
the network device is configured to implement the method according to either of claims 13 and 14.

FIG. 1

FIG. 2

FIG. 3

Terminal device

Network device

S401: First information

S402: When the first information indicates a measurement gap and does not indicate a measurement window, measure, based on the measurement gap, a first E-UTRA MO that has scheduling restriction and for which a measurement gap is not needed for measurement

S403: When the first information does not indicate the measurement gap and does not indicate the measurement window, skip measuring the first E-UTRA MO that has scheduling restriction and for which a measurement gap is not needed for measurement

FIG. 4

Terminal device

Network device

S501: Third information, indicating a measurement gap and a measurement window

S502: When there is no collision between measurement occasions, perform measurement based on at least one first measurement occasion and at least one second measurement occasion

S503: When there is collision between the measurement occasions, measure a MO based on one or more of the following: priority, quantity of measurement occasions, and measurement gap proportion coefficient

FIG. 5

SMTC

EMTC

FIG. 6

First measurement
occasion

Second measurement
occasion

FIG. 7

Communication apparatus
800

Processing unit 810

Interface unit 820

FIG. 8

Memory

930

910

Processor

930

Memory

Communication
interface

920

900

Memory

930

FIG. 9

## INTERNATIONAL SEARCH REPORT

| International application No. |
|---|
| **PCT/CN2024/115265** |

### A. CLASSIFICATION OF SUBJECT MATTER

H04W36/00(2009.01)i; H04W24/00(2009.01)i

According to International Patent Classification (IPC) or to both national classification and IPC

### B. FIELDS SEARCHED

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT: VEN: ENTXTC; CNKI; 3GPP: 测量, 测量对象, 调度, 限制, 间隙, 间隔, 窗, 生效测量窗, 指示, 间接, 隐式, 冲突, 演进通用陆基无线接入, 不需要, 无, measurement, object, MO, schedule, restrict, gap, window, EMW, effective measurement window, indication, indirect, implicit, conflict, E-UTRA, LTE, without, gap-less, MG-less, no gap

### C. DOCUMENTS CONSIDERED TO BE RELEVANT

| Category* | Citation of document, with indication, where appropriate, of the relevant passages | Relevant to claim No. |
|---|---|---|
| A | ERICSSON. "Discussion On Inter-RAT Measurement Without Gap" *3GPP TSG-RAN WG4 Meeting #107, R4-2308444*, 15 May 2023 (2023-05-15), section 4 | 1-20 |
| A | CN 111406417 A (NOKIA SHANGHAI BELL CO., LTD. et al.) 10 July 2020 (2020-07-10) entire document | 1-20 |
| A | CN 113473549 A (HONOR DEVICE CO., LTD.) 01 October 2021 (2021-10-01) entire document | 1-20 |
| A | CN 113543240 A (HUAWEI TECHNOLOGIES CO., LTD.) 22 October 2021 (2021-10-22) entire document | 1-20 |
| A | WO 2022211369 A1 (LG ELECTRONICS INC.) 06 October 2022 (2022-10-06) entire document | 1-20 |
| A | ZTE CORP. "Discussion On Inter-RAT Measurement Without Gaps" *3GPP TSG-RAN WG4 Meeting #108, R4-2313111*, 11 August 2023 (2023-08-11), section 2 | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 November 2024** | **20 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/115265**

| Patent document cited in search report | | | Publication date (day/month/year) | Patent family member(s) | Publication date (day/month/year) |
|---|---|---|---|---|---|
| CN | 111406417 | A | 10 July 2020 | None | |
| CN | 113473549 | A | 01 October 2021 | None | |
| CN | 113543240 | A | 22 October 2021 | None | |
| WO | 2022211369 | A1 | 06 October 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311288677